# EUROPEAN PATENT SPECIFICATION

(11) **EP 1 880 053 B1**
(45) Date of publication and mention of the grant of the patent: **31.07.2019**
(21) Application number: 05745664.2
(22) Date of filing: 04.05.2005
(51) Int. Cl.: D21C 3/18, D21C 3/20, D21C 9/14, C02F 1/00, C02F 1/76, C02F 3/00, C02F 3/34, C02F 11/00, D21C 5/00, C02F 103/28, D21H 11/04, D21H 17/00, D21H 17/67

(54) **CHLORINE DIOXIDE TREATMENT COMPOSITIONS AND PROCESSES**
CHLORDIOXIDBEHANDLUNGSZUSAMMENSETZUNGEN UND VERFAHREN
COMPOSITIONS ET PROCEDES DE TRAITEMENT AU DIOXYDE DE CHLORURE

(43) Date of publication of application: 23.01.2008
(73) Proprietor: Novozymes North America, Inc., Franklinton, NC 27525 (US); Novozymes A/S, 2880 Bagsværd (DK)
(72) Inventor: XU, Hui, Wake Forest, NC 27587 (US); BLOOMFIELD, Kim, Raleigh, NC 27603 (US); LUND, Henrik, DK-3500 Vaerlose (DK)
(74) Representative: NZ EPO Representatives
(86) International application number: PCT/US2005/015577
(87) International publication number: WO 2006/126983

(56) References cited:
- EP-A1- 0 433 258
- EP-A1- 0 433 258
- EP-A2- 0 598 538
- WO-A1-92/09741
- WO-A1-99/54545
- DK-A- 127 894
- US-A- 5 324 432
- US-A- 5 785 811
- US-A- 5 785 811
- US-A- 5 846 788
- US-A- 5 866 393
- US-A- 5 891 339
- US-A1- 2003 124 710
- US-A1- 2005 115 895
- US-B1- 6 187 136
- US-B1- 6 242 245
- US-B1- 6 610 172
- US-B1- 6 660 128
- US-B2- 6 503 508

## Description

### FIELD OF THE INVENTION

The present invention relates to methods and compositions for improving chlorine dioxide treatment processes, such as, pulp delignification and bleaching processes.

### BACKGROUND

Chlorine dioxide is one of the most widely used delignification/bleaching agents in the pulp and paper industry, providing a high-quality, low-cost delignification and bleaching process. Chlorine dioxide treatment is superior to chlorine bleaching processes in that it virtually eliminates all dioxin discharges into the environment, and has accordingly, helped pulp and paper manufactures to employ environmentally friendly processes and to meet environmental requirements. Accordingly, the use of chlorine dioxide treatment is increasing and most pulp and paper mills now have at least one chlorine dioxide delignification or bleaching stage. Chlorine dioxide treatment has also been used to treat wastewater, sludge and other process streams.

During the chlorine dioxide treatment processes some of the chlorine dioxide is converted to chlorate and chlorite, which decreases the efficiency of the chlorine dioxide treatment. Methods have been proposed to improve the efficiency of the chlorine dioxide treatment process by reducing chlorate and chlorite formation. Seger et al., Chiang, Tappi J., 1992, 75(7):174-180, for example, discloses a two step high-pH and low-pH process, which is believed to reduce the formation of chlorate at the higher pH and chlorite becomes reactive in the low-pH step. Joncourt et al., International Symp. Wood Pulping Chemistry, Montreal, Jun. 9-12, 1997, discloses the use of iron to regenerate chlorine dioxide from chlorite. Jiang et al, U.S. Patent No. 6,235,154, discloses process for improving chlorine dioxide delignification or bleaching by regenerate chlorine dioxide from the chlorite using formaldehyde. WO 99/54545 A1 describes a process of delignifying lignocellulosic materials and bleaching of pulp and dyes wherein a transition metal complex is oxidized by a phenol oxidase, e.g. a laccase or a peroxidase. EP 0 598 538 A2 discloses a method for bleaching and/or delignification of wood pulps, using soybean peroxidase in the presence of peroxide. EP 0 433 258 A1 discloses a procedure for the production of mechanical pulp from a fibrous product, wherein the fibrous product is subjected to a chemical and/or enzymatic treatment in which a binding agent is linked with the lignin in the fibrous product, in order to increase the strength of the pulp. WO 92/09741 A1 discloses a method for bleaching cellulosic pulp, in which process an oxidizing enzyme, e.g. laccase, and a chlorine-containing chemical is utilized, wherein a transitional element metal, e.g. manganese, is also utilized. US 5 785 811 A discloses a process which comprises treating a lignocellulosic pulp with soybean peroxidase in the presence of a peroxide, and removing lignin from said pulp.

New compositions and methods are needed to improve the efficiency and effectiveness of chlorine dioxide treatment, including, chlorine dioxide delignification and bleaching processes.

### SUMMARY OF THE INVENTION

The present invention relates to methods for chlorine dioxide delignification and/or bleaching processes by reacting pulp with chlorine dioxide and a haloperoxidase, wherein the haloperoxidase is applied as part of the chlorine dioxide solution. In accordance with the present invention, a peroxidase is added to a chlorine dioxide delignification and/or bleaching step. Although not limited to any one theory of operation, the addition of a peroxidase and/or a laccase to a chlorine dioxide treating composition is believed to result in the regeneration of chlorine dioxide from chlorite, resulting in improved delignification and/or brightening during bleaching of pulp.

The present invention relates to methods for chlorine dioxide treatment of wastewater, sludge or any other process stream. In accordance with the present invention, a haloperoxidase is added to a chlorine dioxide treatment step as part of the chlorine dioxide solution to improve the chlorine dioxide treatment process.

### DETAILED DESCRIPTION

A "peroxidase" means a peroxidase (E.C.1.11.1.7) and/or a haloperoxidase, such, as, preferably, a chloride peroxidase (E.C.1.11.1.10). Preferably, the peroxidase is an acid stable peroxidase.

Peroxidases may be obtained from any suitable source, such as, e.g., from plants (e.g., a soy bean or horseradish peroxidase) and from microorganisms (fungi and bacteria, such as, e.g., the peroxidase may be obtained from a strain of *Coprinus,* e.g., C. *cinerius* or C. *macrorhizus,* or of *Bacillus,* e.g. *B. pumilu*). Some preferred fungal sources include strains belonging to the subdivision Deuteromycotina, class Hyphomycetes, e.g., Fusarium, Humicola, Tricoderma, Myrothecium, Verticillum, Arthromyces, Caldariomyces, Ulocladium, Embellisia, Cladosporium or Dreschlera, in particular, *Fusarium oxysporum* (DSM 2672), *Humicola insolens, Trichoderma resii, Myrothecium verrucana* (IFO 6113), *Verticillum alboatrum, Verticillum dahlie, Arthromyces ramosus* (FERM P-7754), *Caldariomyces fumago, Ulocladium chartarum, Embellisia alli* or *Dreschlera halodes.* Other preferred fungal sources include strains belonging to the subdivision Basidiomycotina, class Basidiomycetes, e.g., Coprinus, Phanerochaete, Coriolus or Trametes, in particular *Coprinus cinereus f. microsporus* (IFO 8371), *Coprinus macrorhizus, Phanerochaete chrysosporium* (e.g., NA-12) or *Coriolus versicolor* (e.g., PR4 28-A). Further preferred fungal sources include strains belonging to the subdivision Zygomycotina, class Mycoraceae, e.g., Rhizopus or Mucor, in particular, *Mucor hiemalis.*

Some preferred bacterial peroxidase sources include strains of the order Actinomycetales, e.g., *Streptomyces spheroides* (ATTC 23965), *Streptomyces thermoviolaceus* (IFO 12382) or *Streptoverticillum verticillium ssp. verticillium.* Other preferred bacterial sources include *Bacillus pumillus* (ATCC 12905), *Bacillus stearothermophilus, Rhodobacter sphaeroides, Rhodomonas palustri, Streptococcus lactis, Pseudomonas purrocinia* (ATCC 15958) or *Pseudomonas fluorescens* (NRRL B-11).

Haloperoxidases may be obtained form any suitable source. Haloperoxidases, for example, have been isolated from various organisms, including mammals, marine animals, plants, algae, a lichen, fungi and bacteria (for reference see Biochimica et Biophysica Acta 1161, 1993, pp. 249-256). Suitable choloroperoxidases include the chloroperoxidase obtained from the fungus *Curvularia inaequalis* (see SWISS-PROT:P49053), the chloroperoxidase obtained from the fungus *Curvularia verruculosa* (see WO 97/04102) and the chloroperoxidases disclosed in Svendsen et al, U.S. Patent No. 6,372,465.

Laccases (EC 1.10.3.2) may be obtained from any suitable sources, such as, from a genus selected from the group consisting of Aspergillus, Botrytis, Collybia, Fomes, Lentinus, Myceliophthora, Neurospora, Pleurotus, Podospora, Polyporus, Scytalidium, Trametes, and Rhizoctonia. In a more preferred embodiment, the laccase is obtained from a species selected from the group consisting of *Humicola brevis var. thermoidea, Humicola brevispora, Humicola grisea var. thermoidea, Humicola insolens,* and *Humicola lanuginosa* (also known as *Thermomyces lanuginosus*), *Myceliophthora thermophila, Myceliophthora vellerea, Polyporus pinsitus, Scytalidium thermophila, Scytalidium indonesiacum,* and *Torula thermophila.* The laccase may be obtained from other species of Scytalidium, such as *Scytalidium acidophilum, Scytalidium album, Scytalidium aurantiacum, Scytalidium circinatum, Scytalidium flaveobrunneum, Scytalidium hyalinum, Scytalidium lignicola,* and *Scytalidium uredinicolum. Rhizoctonia solani* and *Coprinus cinereus.* The laccase may be obtained from other species of Polyporus, such as *Polyporus zonatus, Polyporus alveolaris, Polyporus arcularius, Polyporus australiensis, Polyporus badius, Polyporus biformis, Polyporus brumalis, Polyporus ciliatus, Polyporus colensoi, Polyporus eucalyptorum, Polyporus meridionalis, Polyporus varius, Polyporus palustris, Polyporus rhizophilus, Polyporus rugulosus, Polyporus squamosus, Polyporus tuberaster,* and *Polyporus tumulosus.*

A "chlorine dioxide treatment" means any chloride dioxide treatment process, such as, for example, chlorine dioxide treatment stages used in pulp and paper mills and chlorine dioxide treatment of wastewater and/or sludge, for example, plant wastewater or ordinary household sewage or wastewater.

Typically chlorine dioxide treatment is applied in a pulp and paper mills in delignification and pulp bleaching processes. Any suitable pulp may be treated, although preferably, the pulp is a lingocellulosic pulp. The pulp may be treated with other delignification and/or bleaching agents prior to, during or following the chlorine dioxide treatment, such as, e.g., oxygen delignification, peroxide treatment, and enzyme treatment processes.

The chlorine dioxide used in the treatment process may be generated by any suitable method. However, because chlorine dioxide is unstable as a gas and can only stored as a solution, it is usually generated on-site, e.g., at the pulp mill. Once in solution, however, chlorine dioxide is fairly stable.

Chlorine dioxide is generally added in amounts effective to treat the pulp or process waters (e.g., waste water), as are known in the art.

Typically, chlorine dioxide treatment of pulp is carried out at a temperature from about 40 to 80°C for a period of about 15 to 120 min. The effectiveness of the chlorine dioxide depends in part on pH, and is maximized at a pH of about 2 to 4. Because the pH of pulp streams and other process waters are typically more basic, acid may be added to the treatment water to reduce the pH. In some processes, the pH of the process water may be controlled by applying excess amounts of chlorine dioxide.

The peroxidase and/or laccase is/are applied directly to the chlorine dioxide process stream in an amount effective to improve the chlorine dioxide treatment process, as exemplified below. The peroxidase and/or laccase is applied as part of the chlorine dioxide solution.

The peroxidase and/or laccase are applied in an amount effective to improve the chlorine dioxide treatment process, such as, as measured by improved pulp delignification and/or improved pulp bleaching. An example of an effective amount of a peroxidase is 0.005mg-10g/L of process water, more preferably 0.01-1000mg/L of process water, and most preferably 0.05-500mg/L of process water. In regard to pulp applications, such effective amount of a peroxidase will include 0.01g-20kg/ton of pulp, more preferably 0.1 g-5kg/ton of pulp, and most preferably 1g-2kg/ton of pulp. An example of an effective amount of a laccase is 0.005mg-10g/L of process water, more preferably 0.01-1000mg/L of process water, and most preferably 0.05-500mg/L of process water. In regard to pulp applications, such effective amount of a laccase will include 0.01g-20kg/ton, more preferably 0.1 g-5kg/ton, and most preferably 1g-2kg/ton. The peroxidases and laccases are preferably selected based their compatibility with the process conditions for the pulp treatment or waste water/sludge treatment, e.g., pH optimum, temperature optimum, acid stability.

### EXAMPLES

Example 1:

160 mg of NaClO₂ was dissolved in 100 mL of DI water. 10mL aliquots of the NaClO₂ solution were added to different test tubes. 20 uL of acetic acid were added to each tube and the pH was adjusted to about 3.5. Then 100 uL of enzyme was added to the solution. After 30 min of incubation at ambient temperature, the solution was diluted 3 times by DI water. CIO₂ formation was detected by UV absorbency at 360 nm. It is evident that all of the enzymes can generate CIO₂ to some extent under the conditions used in this experiment.

**Table 1. Enzymatic Chlorine Dioxide Generation**

| No. | Sample | Absorbency at 360 nm |
|---|---|---|
| 1 | Control | 0.155 |
| 2 | Peroxidase from *Coprinus cinereus* (Novozymes) | 0.764 |
| 3 | Haloperoxidase from *Curvularia verruculosa* (Novozymes) | 0.168 |
| 4 | Laccase from *Trametes villosa* (Novozymes) | 0.802 |
| 5 | Laccase from *Coprinus cinereus* (Novozymes) | 0.190 |
| 6 | Laccase from *Myceliophthora thermophila* (Novozymes) | 0.197 |
| 7 | Chloroperoxidase from *Caldariomyces fumago* (Sigma, C-0278) | 0.393 |

### Example 2:

5 g (o.d. dry) of unbleached kraft pulp was added to each beaker and diluted to about 5% consistency. The pulp was adjusted to various pH by 2N H₂SO₄. 10 mL of 11.3/L of NaClO₂ was added to each beaker. 500 ul of peroxidase (*Coprinus cinereus* peroxidase, Novozymes) was added to the solution and the beaker was incubated at 60°C for 1hr. After bleaching, the pulp was rinsed with DI water and handsheets were made and tested for brightness. Brightness was tested according to Tappi standard (T452). It is clear the peroxidase improved pulp brightness in all the pH range.

| pH | Sample | Brightness |
|---|---|---|
| 3 | Control | 50.4 |
| 3 | Peroxidase | 51.4 |
| 4 | Control | 46.8 |
| 4 | Peroxidase | 47.3 |
| 5 | Control | 43.3 |
| 5 | Peroxidase | 44.2 |
| 6 | Control | 42.8 |
| 6 | Peroxidase | 45.0 |

## Claims

1. A method for delignifying and/or bleaching of a pulp, comprising reacting chlorine dioxide and a haloperoxidase with a pulp,
wherein the haloperoxidase is applied as part of the chlorine dioxide solution.

2. The method of claim 1, wherein the haloperoxidase is a chloride peroxidase.

3. The method of claim 1, wherein the haloperoxidase is a *Coprinus* peroxidase, a *Bacillus* peroxidase, a soy bean peroxidase or a horseradish peroxidase.

4. The method of claim 2, wherein the chloride peroxidase is a *Curvularia inaequalis* peroxidase or *Curvularia verruculosa* peroxidase.

5. The method of claims 1-4 further comprising addition of a laccase to a chlorine dioxide treating composition, wherein the laccase is applied directly to the chlorine dioxide process stream in an amount of 0.005 mg - 10 g/L of process water.

6. The method of claim 5, wherein the laccase is applied in an amount of 0.01 - 1000 mg/L of process water.

7. The method of claim 5, wherein the laccase is applied in an amount of 0.05 - 500 mg/L of process water.

8. The method of claims 1-4 further comprising addition of a laccase to a chlorine dioxide treating composition, wherein the laccase is applied directly to the chlorine dioxide process stream in an amount of 0.01 g - 20 kg/ton of pulp.

9. The method of claim 8, wherein the laccase is applied in an amount of 0.1 g - 5 kg/ton of pulp.

10. The method of claims 8, wherein the laccase is applied in an amount of 1 g - 2 kg/ton of pulp.

11. A method for treating wastewater and/or sludge, comprising reacting wastewater and/or sludge with chlorine dioxide and a haloperoxidase,
wherein the haloperoxidase is applied as part of the chlorine dioxide solution.

12. The method of claim 11, wherein the haloperoxidase is a chloride peroxidase.

13. The method of claim 11, wherein the haloperoxidase is a *Coprinus* peroxidase, a *Bacillus* peroxidase, a soy bean peroxidase or a horseradish peroxidase.

14. The method of claim 12, wherein the chloride peroxidase is a *Curvularia inaequalis* peroxidase or *Curvularia verruculosa* peroxidase.

15. The method of claims 11-14, further comprising reacting wastewater and/or sludge with a laccase.

## Patentansprüche

1. Verfahren zum Delignifizieren und/oder Bleichen einer Pulpe, das Umsetzen von Chlordioxid und einer Haloperoxidase mit einer Pulpe umfasst,
wobei die Haloperoxidase als Teil der Chlordioxidlösung angewendet wird.

2. Verfahren nach Anspruch 1, wobei die Haloperoxidase eine Chloridperoxidase ist.

3. Verfahren nach Anspruch 1, wobei die Haloperoxidase eine *Coprinus-*Peroxidase, eine *Bacillus*-Peroxidase, eine Sojabohnenperoxidase oder eine Meerrettich peroxidase ist.

4. Verfahren nach Anspruch 2, wobei die Chloridperoxidase eine *Curvularia inaequalis-*Peroxidase oder eine *Curvularia verrucutosa*-Peroxidase ist.

5. Verfahren nach Ansprüchen 1-4, das des Weiteren eine Zugabe einer Laccase zu einer Chlordioxid-Behandlungszusammensetzung umfasst, wobei die Laccase direkt zum Chlordioxid-Verfahrensstrom in einer Menge von 0,005 mg - 10 g/L Verfahrenswasser angewendet wird.

6. Verfahren nach Anspruch 5, wobei die Laccase in einer Menge von 0,01 - 1000 mg/L Verfahrenswasser angewendet wird.

7. Verfahren nach Anspruch 5, wobei die Laccase in einer Menge von 0,05 - 500 mg/L Verfahrenswasser angewendet wird.

8. Verfahren nach Ansprüchen 1-4, das des Weiteren die Zugabe einer Laccase zu einer Chlordioxid-Behandlungszusammensetzung umfasst, wobei die Laccase direkt zum Chlordioxid-Verfahrensstrom in einer Menge von 0,01 g - 20 kg/Tonne Pulpe angewendet wird.

9. Verfahren nach Anspruch 8, wobei die Laccase in einer Menge von 0,1 g - 5 kg/Tonne Pulpe angewendet wird.

10. Verfahren nach Ansprüchen 8, wobei die Laccase in einer Menge von 1 g - 2 kg/Tonne Pulpe angewendet wird.

11. Verfahren zum Behandeln von Abwasser und/oder Klärschlamm, das Umsetzen des Abwassers und/oder Klärschlamms mit Chlordioxid und einer Haloperoxidase umfasst,
wobei die Haloperoxidase als Teil der Chlordioxidlösung angewendet wird.

12. Verfahren nach Anspruch 11, wobei die Haloperoxidase eine Chloridperoxidase ist.

13. Verfahren nach Anspruch 11, wobei die Haloperoxidase eine *Coprinus*-Peroxidase, eine *Bacillus*-Peroxidase, eine Sojabohnenperoxidase oder eine Meerrettich peroxidase ist.

14. Verfahren nach Anspruch 12, wobei die Chloridperoxidase eine *Curvularia inaequalis*-Peroxidase oder eine *Curvularia verruculosa*-Peroxidase ist.

15. Verfahren nach Ansprüchen 11-14, das des Weiteren Umsetzen von Abwasser und/oder Klärschlamm mit einer Laccase umfasst.

## Revendications

1. Méthode pour délignifier et/ou blanchir une pâte, comprenant la réaction de dioxyde de chlore et d'une haloperoxydase avec une pâte,
dans laquelle l'haloperoxydase est appliquée en tant que partie de la solution de dioxyde de chlore.

2. Méthode selon la revendication 1, dans laquelle l'haloperoxydase est une chlorure peroxydase.

3. Méthode selon la revendication 1, dans laquelle l'haloperoxydase est une peroxydase de *Coprinus,* une peroxydase de *Bacillus,* une peroxydase de soja ou une peroxydase de raifort.

4. Méthode selon la revendication 2, dans laquelle la chlorure peroxydase est une peroxydase de *Curvularia inaequalis* ou une peroxydase de *Curvularia verruculosa.*

5. Méthode selon les revendications 1 à 4, comprenant en outre l'addition d'une laccase à une composition de traitement au dioxyde de chlore, dans laquelle la laccase est appliquée directement au flux de traitement au dioxyde de chlore en une quantité de 0,005 mg à 10 g/l d'eau de traitement.

6. Méthode selon la revendication 5, dans laquelle la laccase est appliquée en une quantité de 0,01 à 1000 mg/l d'eau de traitement.

7. Méthode selon la revendication 5, dans laquelle la laccase est appliquée en une quantité de 0,05 à 500 mg/l d'eau de traitement.

8. Méthode selon les revendications 1 à 4, comprenant en outre l'addition d'une laccase à une composition de traitement au dioxyde de chlore, dans laquelle la laccase est appliquée directement au flux de traitement au dioxyde de chlore en une quantité de 0,01 g à 20 kg/tonne de pâte.

9. Méthode selon la revendication 8, dans laquelle la laccase est appliquée en une quantité de 0,1 g à 5 kg/tonne de pâte.

10. Méthode selon la revendication 8, dans laquelle la laccase est appliquée en une quantité de 1 g à 2 kg/tonne de pâte.

11. Méthode pour traiter des eaux usées et/ou des boues, comprenant la réaction des eaux résiduaires et/ou boues avec du dioxyde de chlore et une haloperoxydase,
dans laquelle l'haloperoxydase est appliquée en tant que partie de la solution de dioxyde de chlore.

12. Méthode selon la revendication 11, dans laquelle l'haloperoxydase est une chlorure peroxydase.

13. Méthode selon la revendication 11, dans laquelle l'haloperoxydase est une peroxydase de *Coprinus,* une peroxydase de *Bacillus,* une peroxydase de soja ou une peroxydase de raifort.

14. Méthode selon la revendication 12, dans laquelle la chlorure peroxydase est une peroxydase de *Curvularia inaequalis* ou une peroxydase de *Curvularia verruculosa.*

15. Méthode selon les revendications 11 à 14, comprenant en outre la réaction des eaux usées et/ou des boues avec une laccase.
